(19) Europäisches Patentamt
European Patent Office
Office européen des brevets

(11) Publication number: **0 351 912**
**A1**

(12) # EUROPEAN PATENT APPLICATION

(21) Application number: **89201860.7**

(22) Date of filing: **14.07.89**

(51) Int. Cl.⁴: **H04N 7/08 , H04N 5/44**

(30) Priority: **20.07.88 GB 8817312**

(43) Date of publication of application:
**24.01.90 Bulletin 90/04**

(84) Designated Contracting States:
**DE ES FR GB IT**

(71) Applicant: **PHILIPS ELECTRONIC AND ASSOCIATED INDUSTRIES LIMITED**
**Philips House 188 Tottenham Court Road**
**London W1P 9LE(GB)**
(84) **GB**

Applicant: **N.V. Philips' Gloeilampenfabrieken**
**Groenewoudseweg 1**
**NL-5621 BA Eindhoven(NL)**
(84) **DE ES FR IT**

(72) Inventor: **Kinghorn, John Ritchie**
**c/o Philips Components New Road Mitcham Junction**
**Mitcham Surrey, CR4 4XY(GB)**

(74) Representative: **Cole, Bernard Victor et al**
**PHILIPS ELECTRONICS Patents and Trade Marks Department Centre Point New Oxford Street**
**London WC1A 1QJ(GB)**

(54) Teletext decoders.

(57) A character generator for a teletext decoder has a character memory (CM) including two different character sets each composed of a plurality of characters. Main control information in the acquired teletext information for a selected page determines which one of the two character sets is to be addressed initially by digital codes which represent the acquired teletext information and are stored in a page memory (PM) and are read out successively from the page memory to identify the characters for the displayed page. One of the stored digital codes for the page represents ancillary control information and when this digital code is read out switching means respond thereto to cause the other character set to be addressed by the digital codes subsequently read out from the page memory. This mode of addressing the character memory has the advantage that characters from the two character sets can be used to display a page.

*Fig.4.*

## TELETEXT DECODERS

This invention relates to teletext recorders for receiving, storing and processing teletext information which is transmitted as digitally coded data.

A teletext decoder which is suitable for producing character display data for a teletext display page includes an acquisition circuit for acquiring digital codes representing the teletext information for the page, a page memory for storing the acquired digital codes, or digital codes derived therefrom, at individual memory locations, and a character generator for producing character display data in accordance with the stored digital codes.

Conventionally, the character generator includes a character memory in which is stored character information representing the character shapes which are available for display. The character memory is addressed selectively using the digital codes stored in the page memory to read out the character display data. The character information for each character shape is stored in at least one individual character memory location which is addressable by a respective digital code. Normally, only a portion of the character information for a character shape is read out at any one time as the character display data, which portion is displayed in a current scanning line of the display.

Current transmissions of teletext information are in broadcast television signals. These teletext transmissions in the United Kingdom are essentially only in the English language, and a character generator which is used for these transmissions includes a character memory containing the character information for an English language character set. Where teletext transmissions are provided in a country whose national language uses a different character set, a character generator which is used for these latter transmissions can include a character memory containing the character information for a character set for the language concerned.

The character requirements of the major European languages differ only in a few (~11) national use character options. Therefore, these requirements can be met by a single composite character memory containing the character information for a common character set and a plurality of national option character sub-sets each of which sub-sets forms with the common character set a different complete language character set.

In current teletext transmissions, control information which forms part of the teletext information for a page identifies which language character set should be used to display the page. Where a teletext decoder has a character generator with a character memory containing, as aforesaid, a common character set and a plurality of national option character sub-sets, this control information is used in the teletext decoder to select a particular sub-set from those which are available and thereby in effect select a particular language character set. As is known from U.K. Patent Application GB 2 149 627A, a small group of the total number of the possible digital codes representing the teletext information may be allocated in common for identifying different character shapes in several national option character sub-sets, the character information for each of which is stored in a respective block of character memory locations. The control information is used to determine which block is to be addressed in respect of acquired digital codes belonging to this small group. If these acquired digital codes as stored in the page memory are not codes which can themselves address memory locations in the selected block, then code conversion is carried out when these digital codes are read out from the page memory to convert them into the appropriate codes for this addressing. To achieve this, each of the digital codes in the small group has to be identified separately so as to be code converted, or not, in accordance with the control information.

In the development of teletext systems, it has been found desirable to have a teletext page displayed in more than one language, for instance to meet the needs of a country which can receive a teletext transmission from a neighbouring country having a different national language. This facility requires the character information in all the national option character sub-sets to be accessible for a single teletext display page and not solely the character information for the particular sub-set which forms part of the single language character set that is selected by the control information.

An existing method of achieving the additional character memory addressing for this requirement is to include in the teletext information for a display page auxiliary control information which identifies memory locations in the page memory and specifies which digital codes are to be stored therein. These digital codes pertain to any of the character memory locations individually so that character information for any character shape in any of the national option character sub-sets becomes accessible. However, this method is only practicable for addressing the character memory locations containing character information for a small number of character shapes in a sub-set, or sub-sets, different from that selected by the original control information, because of the amount of auxiliary control information that is required. Therefore, this existing method is not suited to the needs of a country where the language requirements are such that a teletext display page is to be, for instance, in two languages, each using its own individual language character set, or in a single language which can be written using either one of two different language character sets. In either case, one of the two language character sets is to be initially selected by the original control information and the other set is to be selected as required for the same teletext display page.

The present invention proposes a character generator which is adapted to operate in an addressing mode which fulfils this need in a simple manner.

According to the invention, there is provided a character generator suitable for use in a teletext decoder, which character generator comprises a character memory for storing character information representing character shapes and addressing means for addressing the character memory to read out character information using digital codes stored in a page memory and read out therefrom in a sequence for application to the addressing means, and which is characterised in that said character memory has a first group of memory locations containing character information for a first character set and a second group of memory locations containing character information for a second character set, in that said addressing means is operable in response to successive digital codes applied thereto from the page memory to address respective memory locations of one of the first and second groups as selected by main control information accompanying said digital codes, and in that said addressing means comprises switching means responsive to ancillary control information constituted by a particular digital code in said sequence to cause the addressing means to be further operable in response to subsequent digital codes applied thereto to address respective memory locations of the other of said first and second groups.

The present invention thus provides a character generator in which a plurality of successive digital codes pertaining to the same display page can be used selectively to obtain character information from either one of two character sets without the need to detect each digital code individually for code conversion.

In carrying out the invention in respect of two separate language character sets, either set may be selected by the main control information as the first character set. The occurrence in the sequence of digital codes read out from the page memory of the particular digital code constituting the ancillary control information will then cause the addressing means to 'twist' the addressing from the memory locations of the first group to those of the second group.

The character generator may be further arranged so that a next occurrence of the particular digital code will cause the addressing means to 'twist' the addressing back again to the first group of memory locations and so on, for each further occurrence of the particular digital code.

The character generator may be still further arranged so that the addressing means reverts to addressing the first group of memory locations (i.e. the group identified by the main control information) at predetermined times, for instance at the beginning of each character row of a teletext display page.

In order that the invention may be more fully understood reference will now be made by way of example to the accompanying drawings, of which:-

Figure 1 is a block diagram of a teletext television receiver including a teletext decoder in which the invention can be embodied;

Figure 2 is a simplified block diagram of the teletext decoder;

Figure 3 is a memory map table illustrating the character memory addressing in a character generator according to the invention; and

Figure 4 is a block diagram showing elements of the teletext decoder for implementing the invention.

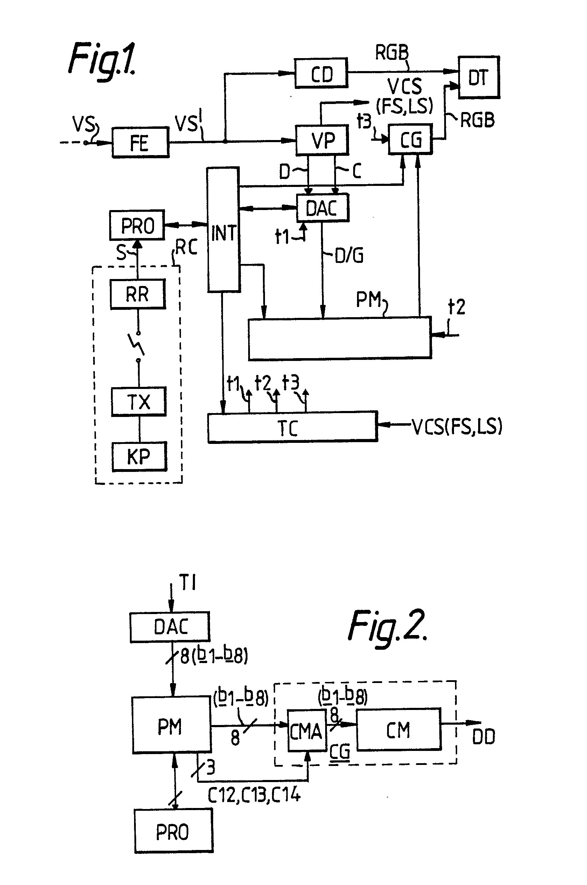

Referring to the drawings, the teletext television receiver shown in Figure 1 comprises video and data processing circuits for receiving and displaying both normal picture information and teletext information. The front end FE of the receiver comprises conventional amplifying, tuning and intermediate frequency detector circuits, and is connected to receive an incoming television video signal VS. For normal picture display by the television receiver, the demodulated video signal VS' is applied to a colour decoder which produces the RGB component signals for the picture display. Time base circuits for a display device DT (e.g. a CRT) receive the usual line and field synchronising pulses from a sync. separator circuit which extracts these synchronising pulses from the video signal VS'. The element CD represents the colour decoder and these other circuits which are provided for normal picture display.

The demodulated video signal VS' is also applied to a teletext decoder section of the television receiver that deals with the reception and display of alpha-numeric text and other teletext information which is received as digitally coded data. This section comprises a video processor circuit VP which performs data slicing for retrieving teletext data pulses D from the video signal VS'. The video processor VP also produced input data clock pulses C from the data pulses D. The data pulses D are fed together with the clock pulses C to a data acquisition circuit DAC which is operable to feed selected groups D/G of the teletext data pulses to a page memory PM as digital codes representing address, display and control information. The page memory PM has a capacity for storing the display and control information for at least one teletext display page.

A logic processor PRO is operable in accordance with page select signals S applied to it from a remote control arrangement RC to control which groups of teletext data pulses D/G are acquired by the data acquisition circuit DAC. The arrangement RC has a receiver part RR and a remote transmitter part comprising a transmitter TX and a keypad KP. The processor PRO is further operable to read out from the page memory PM the stored digital codes for application to a character generator CG which is responsive to the applied digital codes to produce RGB component signals for displaying the selected page. A timing circuit TC provides timing signals on connections t1 to t3 for the circuit elements DAC, PM and CG. These circuit elements and the timing circuit TC are accessed by the processor PRO via an interface circuit INT. The operation of the timing circuit TC is synchronised with the received video signal VS by a composite pulse signal VCS which contains the line (LS) and field (FS) synchronising pulses as separated from the demodulated video signal VS′ in the video processor VP.

In the teletext television receiver shown in Figure 1, only single line connections have been shown for the interconnections between the various circuit elements for the sake of simplicity. However, it will be apparent to a person skilled in the art that in practice many of these interconnections would be multi-line. For instance, whereas the teletext data pulses D retrieved from the video signal VS′ are applied serially to the data acquisition circuit DAC over a single line connection, serial-to-parallel conversion takes place within this circuit DAC, so that the groups D/G of teletext data pulses are applied to the memory PM in parallel over a multi-line connection.

Although a composite television receiver for receiving both normal picture information and teletext information is exemplified in Figure 1, it will be appreciated that the teletext decoder section for data acquisition together with the front end FE may be provided as a separate teletext decoder which is adapted to feed either a display monitor or a conventional television receiver. Also, the teletext information stored in the page memory may be utilised for purposes other than display, depending on its content. For instance, the teletext information can be read from the page memory under the control of the processor for onward transmission over an external data link (not shown) to a computer or other data terminal.

The simplified block diagram in Figure 2 of the teletext decoder shows the data acquisition circuit DAC, the page memory PM, the processor PRO, and the character generator CG which includes a character memory CM and an associated addressing circuit CMA.

For the present purposes, it will be assumed that the teletext information to be processed by the teletext decoder conforms to the specification laid down in the document "Broadcast Teletext Specification", September 1976, published jointly by the British Broadcasting Corporation, Independent Broadcasting Authority and British Radio Equipment Manufacturers' Association. In this document, a quantity of teletext information to be considered as an entity is termed a page, as already mentioned. All of the pages which are available are normally transmitted in a recurrent cycle., with or without up-dating page information, as appropriate. The teletext decoder is operable to select any page and the digital codes representing the page information are acquired by the teletext decoder from the cyclic transmission and stored in the page memory for as long as the page is required. Each page consists of up to 24 display rows each having 40 character positions. The first display row (Row 0) of each page is termed a page-header and contains inter-alia the page number.

The data acquisition circuit DAC receives teletext information TI representing display and control characters as serial data pulses which it converts into 8-bit codes $b1$ to $b8$ of which the seven bits $b1$ to $b7$ of each code represent a digitally coded character and the eighth bit $b8$ is a parity bit. The parity bit is used to test for odd-parity and is stripped off each received code which, if its parity checks out, is stored in the page memory PM with its eighth bit $b8$ re-instated as the most significant bit but always as a logic 0. Under the control of the processor PRO, the 8-bit codes $b1$ to $b8$ are read out from the page memory PM and applied to the addressing circuit CMA which uses these applied codes to address the character memory CM to produce character display data DD. A digital code actually used to address the character memory CM may be different from the corresponding digital code read out from the page memory PM, this latter code having undergone code conversion in accordance with three control bits (C12, C13, C14) transmitted in a page header of an acquired page and stored as main control information in the page memory PM. These three control bits select one of a number of different language character sets which is to be used for displaying the acquired page.

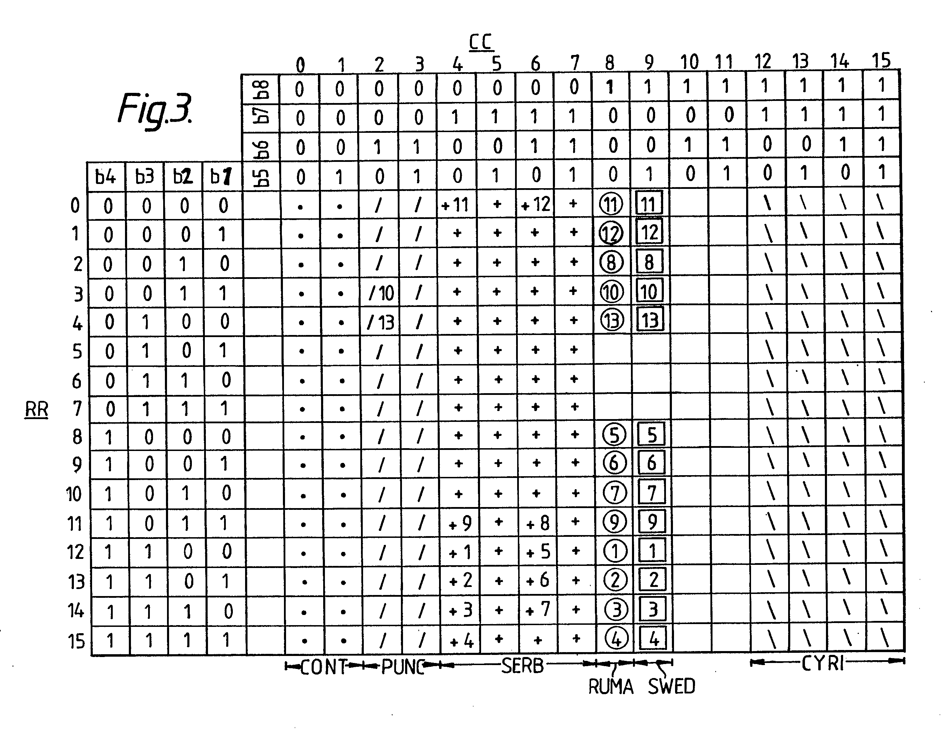

The actual character information which is stored in the character memory CM represents the available character shapes for display. The character shapes, together with so-called control characters which control various display functions are organised as shown in the memory map table of Figure 3. This table comprises 256 character positions arranged in matrix form in 16 rows RR0-RR15 and 16 columns CC0-CC15. These character positions, or more precisely their contents, are identified by respective digital codes comprising eight bits b1 to b8. The 32 character positions in the first two columns CC0 and CC1 contain a set CONT of control characters which are assumed to correspond to those given in the document "Broadcast Teletext Specification". However, for the sake of simplicity in the drawings, each control character is represented only by symbol (.) in the relevant character position. Similarly, in the other groups of columns to be considered, the contents of the various character positions are represented only by a single symbol. The symbol (/) in the character positions of the next two columns CC2 and CC3 represents a set PUNC of different punctuation marks and numbers which are common to different language character sets. A first of these sets SERB is a complete Serbo-Croat character set language and the symbol ( + ) in the next four columns CC5, CC6, CC7 and CC8 represents the various character shapes for this set. The second of these sets CYRI is a complete Cyrillic character set and the symbol (\) in the four columns CC12, CC13, CC14 and CC15 represents the various character shapes for this latter set. The thirteen circled numbers 1 to 13 in column CC8 represent character shapes for a national option character sub-set RUMA appropriate for the Rumanian language. By substituting these character shapes for the thirteen character shapes represented by the numbers 1 to 13 in columns CC2, CC4 and CC6, a complete language character set for the Rumanian language is obtained. Similarly, the thirteen squared numbers 1 to 13 in column CC9 represent character shapes for a national option character sub-set SWED appropriate for the Swedish language and can be likewise substituted to form a complete language character set for the Swedish language. The blank character positions in columns CC10 and CC11 and those in columns CC8 and CC9 are not allocated in the present embodiment, and the respective codes which identify them are therefore not used.

The character memory CM (Figure 2) has an individual memory location for each of the character positions in columns CC2 to CC9 and CC12 to CC15 of the table that contain character shapes, including the punctuation marks and numbers. These memory locations are selectively addressed by the addressing circuit CMA using the 8-bit codes given in the table. The character positions for the control characters represented in columns CC0 and CC1 of the table do not, of course, require corresponding memory locations in the character memory CM.

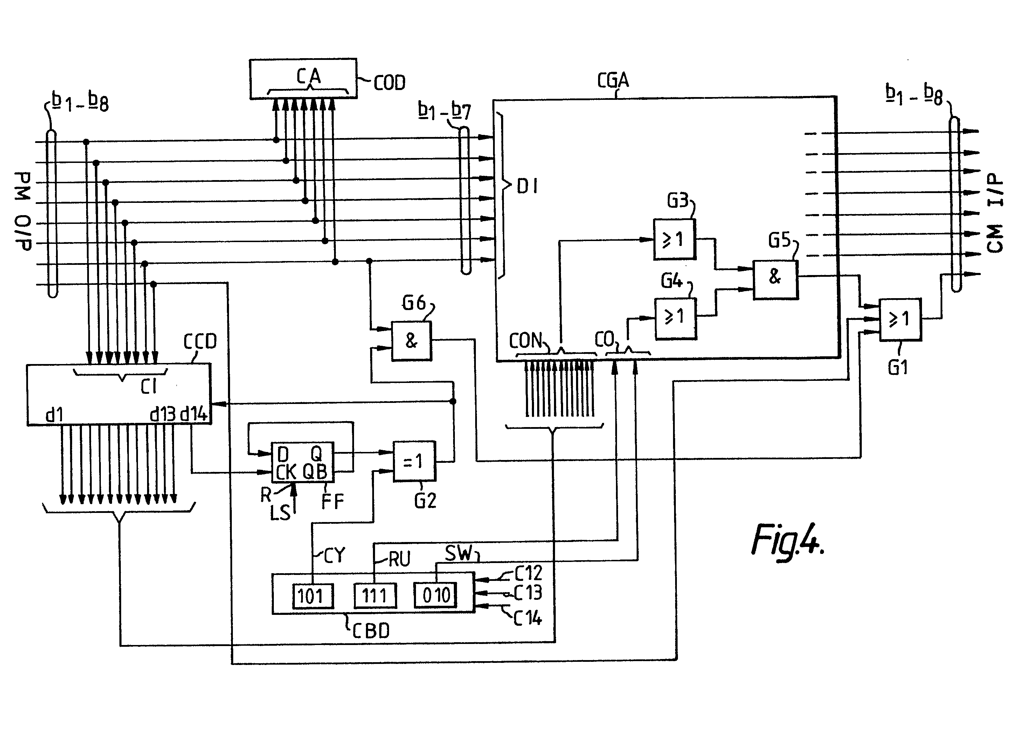

The elements of the teletext decoder shown in Figure 4 form the addressing circuit CMA which produces the requisite 8-bit codes for the selective addressing of the character memory CM (CM I/P). This addressing circuit comprises a conversion gate array CGA to respective data inputs DI of which are applied the seven bits b1 to b7 of the 8-bit codes read out from the page memory PM (PM O/P). The bit b8 which, as aforesaid, is always stored in the page memory PM as a logic 0, is applied to one input of an OR-gate G1 at the output side of the gate array CGA. (Some codes originally received may be changed under processor control and such a changed code can have a bit b8 of logic 1. However, this is not relevant to the present invention.) The output of this gate G1 provides the bit b8 into the character memory CM.

The bits b1 to b8 of the codes read out from the page memory PM are also applied to respective code inputs CI of a character code detector CCD. There are fourteen "decode" outputs d1 to d14 from the detector CCD, of which the outputs d1 to d13 are connected to respective "convert" inputs CON of the gate array CGA. Output d14 is connected to the clock input CK of a flip-flop FF. The reset input R of the flip-flop FF has the line sync. signal LS applied to it, so that this flip-flop is reset at the line scan rate of the display. The output QB of the flip-flop FF is connected to its data input D, the logic value (1 or 0) of which appears at the output Q each time a logic 1 is applied to the clock input CK from the "decode" output d14. Thus, when the flip-flop FF is reset Q = 0 and QB = 1. Also, D = 1 so that Q = 1 and QB = 0 when CK receives a logic 1. Now, D = 0 so that Q = 0 again in response to the next logic 1 at CK and so on. The control bits C12, C13, C14, when received in a page header of an acquired page, are applied to a control bit decoder CBD. There can be up to eight "decode" outputs from the decoder CBD, but in the embodiment begin described only three are shown. These three outputs CY, RU and SW pertain respectively to the Cyrillic, Rumanian and Swedish character sets as identified respectively by the 3 bit codes 101, 111 and 010 of the control bits C12, C13 and C14. Any of the other possible 3 bit codes of these control bits pertain to the Serbo-Croat character set and prevail as a default condition in the absence of any one of the 3 bit codes 101, 111, 010.

The outputs SW and RU are connected to respective control inputs CO of the conversion gate array CGA. The output CY is connected to one input of an exclusive-OR gate G2. Each of these outputs has a logic 1 when the appertaining control bit code combination is present. Each output otherwise has a logic 0. The logic 1 on output SW or RU will cause the array CGA to effect code conversion of any code that is detected by the detector CCD and results in a decode signal of logic 1 appearing on any of the outputs d1 to d13. These codes are those corresponding to the numbers 1 to 13 in columns CC2, CC4 and CC6 of the table in Figure 3. Within the gate array CGA, the inputs CON are connected to respective inputs of an OR-gate G3 and the inputs CO are connected to respective inputs of an OR-gate G4. The outputs of the gates G3 and G4 are connected to respective inputs of an AND-gate G5, the output of which is connected to another input of the gate G1. These gates G3 to G5 exemplify the logic functions performed by the gate array CGA in respect of the bit b8.

The 8-bit codes read out from the page memory PM normally have the bit b8 as a logic 0. Thus, the bit b8 of a code read out from the page memory PM will normally appear as a logic 0 at the output of the gate G1 in the absence of any other logic control. When any one of the outputs d1 to d13 and either one of the outputs RU and SW has a logic 1, the resulting logic 1 at the output of AND-gate G5 sets the output of the gate G1 (bit b8) as a logic 1. Examination of the columns CC8 and CC9 of the table in Figure 3 shows that all the thirteen codes for each of the sub-sets RUMA and SWED have bit b8 = 1. The other bits b1 to b7 for these codes are produced within the gate array CGA by further gating logic (not shown) from the logic values of the bits b1 to b7 of the thirteen numbered codes in the sets PUNC and SERB in conjunction with the logic 1 of the relevant one of the decode signals on the outputs d1 to d13 and the logic 1 of the relevant one of the outputs RU and SW.

The arrangement also includes another AND-gate G6 having one input connected to the output of the gate G2, and another input connected to receive the bit b7 of the codes read out from the page memory PM. There is also shown for the sake of completeness a control code detector COD to respective inputs CA of which are applied the bits b1 to b7 of the codes from the page memory PM. This detector will not be considered further because it is not relevant to the present invention.

Consider now the operation of the arrangement of Figure 4 in response to the different codes of the control bits C12, C13 and C14.

Control bits = 000 or ≠ to 101, 111 and 010
(SW = 0, RU = 0, CY = 0)

In this condition, with flip-flop FF reset, a logic 0 is applied to both inputs of gate G2 whose output therefore applies a logic 0 to one input of gate G2 whose output therefore applies a logic 0 to one input of gate G6 which therefore remains closed irrespective of the logic value of the bit b7 applied to its other input. Also, a logic 0 is applied to at least one input of gate G5 from the gate G4 so that this gate also remains closed. Each of these AND-gates therefore applies a logic 0 to the respective input of the gate G1. The bit b8 of logic 0 applied to the third input of G1 from the page memory PM therefore results in a logic 0 at the gate output and thus the bit b8 applied to the character memory CM has a logic 0. Any of the codes for addressing the memory locations corresponding to the character positions contained in columns CC2 and CC3 (PUNC) and any of the codes for addressing the memory locations corresponding to the character positions contained in columns CC4, CC5, CC6 and CC7 (SERB) when read out from the page memory PM are passed through the array CGA without any conversion to the character memory CM. Because bit b8 always has a logic 0 for this condition, no other addressing of the character memory CM is possible without code conversion being carried out.

Control bits = 010 (SW = 1, RU = 0, CY = 0)

In this condition, the presence of the logic 1 on the output SW will result in any of the codes for addressing character memory locations corresponding to the character positions containing the numbers 1 to 13 in columns CC2, CC4 and CC6, when applied from the page memory PM to the array CGA, undergoing code conversion, as aforesaid, so that the codes actually applied from the array CGA to the character memory CM are, respectively, the codes for addressing the memory locations corresponding to the character positions in column CC9 (SWED). For each of these codes, the detector CCD will be responsive to apply a logic 1 to a respective one of its "decode" outputs d1 to d13 and the actual code conversion is effected using the logic 1 on this output and the logic 1 on the output SW to alter gating conditions within the array CGA such that each input code becomes the appropriate output code. Such code conversion techniques are known in the art and therefore need not be considered further. For each of the converted codes for addressing the memory locations corresponding to the character positions in column CC9, the bit b8 has a logic 1 which is determined within the gate array CGA by the gates G3, G4 and G5 as already discussed.

Control bits = 111 (SW = 0, RU = 1, CY = 0)

The operation in this condition is essentially the same as that for the last condition (i.e. control bits = 010, etc), except that the thirteen input codes which can be converted are converted into the codes for addressing the memory locations corresponding to the character positions in column CC8 (RUMA).

Control bits = 101 (SW=0, RU=0, CY=1)

In this condition the logic 1 on output CY is fed via gate G2 to gate G6. When a code read from the page memory PM has a bit b7 of logic 1, gate G6 produces a logic 1 at its output, so that gate G1 applies a bit b8 of logic 1 to the character memory CM. Therefore, both the bits b7 and b8 of the codes for addressing the character memory CM are set at logic 1. Examination of the table in Figure 3 shows that only the memory locations corresponding to the character positions contained in columns CC12 to CC15 (i.e. for the complete character set CYRI) can be addressed in this condition.

It will also be seen from the table that the memory locations corresponding to the character positions in columns CC4 to CC7 (SERB) are addressed using the same codes as those used for addressing the memory locations corresponding to the character positions in columns CC12 to CC15 (CYRI), except that bit b8 has a logic 0 for the (SERB) columns and a logic 1 for the (CYRI) columns. Therefore, when the output of gate G2 is at logic 1, the complete character set (CYRI) can be addressed. Columns CC2 and CC3 (PUNC) can also be addressed in conjunction with the set (CYRI).

Because the control bits C12, C13 and C14 relate to a complete page only, their different 3-bit codes determine only which single language character set is to be used for displaying the page. In accordance with the present invention, the display facility is extended by enabling characters in both the sets SERB and CYRI to be used for the display of a single page. This is achieved by using one of the control character codes as ancillary control information. This control character code is transmitted as part of the teletext information for a page and is stored in the page memory PM along with the other codes for the page. When read out from the page memory PM in the digital code sequence for application to the addressing circuit, this control character code is detected by the detector CCD which is responsive to apply a logic 1 to its "decode" output d14. This logic 1 sets the flip-flop FF whose Q output now supplies a logic 1 to one input of the gate G2. If the character set SERB, with or without one of the sub-sets RUMA and SWED, has been selected by the control bits, then prior to the occurrence of the control character code in the digital code sequence read out from the page memory PM, the characters of this character set, or their counterparts in RUMA or SWED, are being selected for the page display. On the occurrence of the control character code, the output of gate G2 changes from logic 0 to logic 1 and functions in conjunction with the bit b7 of logic 1 of the following codes read out from the page memory PM to produce a logic 1 of the output of gate G6. This changes the bit b8 as applied to the character memory CM from gate G1 from logic 0 to logic 1. As a result, the characters of the character set CYRI are now selected instead of those of the character set SERB. This condition will be thereafter be maintained, depending on the reset logic used in the teletext decoder. A similar 'twist' between the two character sets SERB and CYRI is also achieved when the character set CYRI has initially been selected by the control bits C12, C13 and C14. In this case, the output of gate G2 already has a logic 1 and the logic 1 from the flip-flop Q-output causes the output of gate G2 to change to a logic 0. Gate G6 is now closed to change the bit b8 as applied to the character memory CM from gate G1 from logic 1 to logic 0, so that the character set SERB is selected. In the embodiment being described, the original condition is returned to on the next occurrence of the control character code as a consequence of the resetting of the flip-flop FF by the next logic 1 on the "decoder" output d14. The original condition is also returned to at the end of each character row being displayed as a consequence of the resetting of the flip-flop FF by the signal LS (Figure 1).

The output of the gate G2 is also connected to an inhibiting input of the detector CCD. When this output is at logic 1, it inhibits the production of the logic 1 on any one of the decode signals d1 to d13. This prevents the sub-sets RUMA and SWED being accessed in the "twist" condition in the situation when they are originally selected by the control bits C12, C13 and C14. As a consequence, there can be a 'twist' from either one of the two complete language sets for the Rumanian and Swedish languages as well as from Serbo-Croat character set to the Cyrillic character set, when these character sets are selected initially. When the Cyrillic character set is selected initially there can only be a 'twist' to the Serbo-Croat character set. The inhibiting of the detector CCD is not necessary in this situation.

In implementing the present invention, the particular character code for the 'twist' operation can be in principle any code which is not allocated to a symbol. However, where the invention is to be applied to teletext decoder hardware which has been designed to recognise the control character codes for different functions, it has been found convenient to use as the special character code the so-called escape code ESC which is specified in the document "Broadcast Teletext Specification", but is otherwise unallocated at present. As an alternative differently formatted ancillary control information may be converted under processor control to this character code. Such ancillary control may be conveyed in non-displayable extension packets which packets can be of the type described in the document "World System Teletext" December 1987, compiled by the Department of Trade and Industry of the U.K. Government.

For the purposes of describing the present invention, the necessary logic functions for the 'twist' operation have been represented separately from the array CGA by the three gates G1, G2 and G6. However, in practice these logic functions would be embodied in this gate array, as part of the overall gating which is required for code conversion.

From reading the present disclosure, other modifications will be apparent to persons skilled in the art. Such modifications may involve other features which are already known per se and which may be used instead of or in addition to features already described herein. Although claims have been formulated in this application to particular combinations of features, it should be understood that the scope of the disclosure of the present application also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention. The applicants hereby give notice that new claims may be formulated to such features and/or combinations of such features during the prosecution of the present application or of any further application derived therefrom.

**Claims**

1. A character generator, suitable for use in a teletext decoder, comprising a character memory for storing character information representing character shapes and addressing means for addressing the character memory to read out character information using digital codes stored in a page memory and read out therefrom in a sequence for application to the addressing means, which character generator is characterised in that said character memory has a first group of memory locations containing character information for a first character set and a second group of memory locations containing character information for a second character set, in that said addressing means is operable in response to successive digital codes applied thereto from the page memory to address respective memory locations of one of the first and second groups as selected by main control information accompanying said digital codes, and in that said addressing means comprises switching means responsive to ancillary control information constituted by a particular digital code in said sequence to cause the addressing means to be further operable in response to subsequent digital codes applied thereto to address respective memory locations of the other of said first and second groups.

2. A character generator as claimed in Claim 1, characterised in that said switching means is further responsive to a next occurrence of said particular digital code in said sequence to cause the addressing means to revert to addressing memory locations in said one group in response to the digital codes following said next occurrence.

3. A character generator as claimed in Claim 1 or Claim 2, characterised in that said switching means is also responsive at predetermined times to cause the addressing means to revert to a condition in which it will address memory locations in said one group.

4. A character generator as claimed in Claim 3, characterised in that means are provided for rendering said switching means also responsive as aforesaid at a time corresponding to the beginning of each character row of a teletext display page.

5. A character generator as claimed in any preceding Claim, wherein said digital codes applied to the addressing means from the page memory are n-bit digital codes, characterised in that said addressing means is operable in response to one value of said main control information to add to these applied digital codes an additional bit of one logic value to produce a first set of $n+1$-bit digital codes for addressing one of said first and second groups of memory locations and is further operable in response to another value of said main control information to add to these applied digital codes an additional bit of the other logic value to produce a second set of $n+1$-bit digital codes for addressing the other of said first and secnd groups of memory locations, said switching means being operable on each response thereof to reverse the subsisting value of said additional bit of the digital codes being used to address the character memory.

6. A character generator as claimed in Claim 5, characterised in that said n-bit codes all have a most significant bit of the same logic value which distinguishes these codes from other possible n-bit digital codes, gating means being provided in said addressing means to permit said switching means to be responsive only when said most significant bit of an applied n-bit code has the distinguishing logic value.

7. A teletext decoder embodying a character generator as claimed in any preceding Claim, including an acquisition circuit for acquiring digital codes representing teletext information, and a page memory for storing the acquired digital codes, said character generator being operable to produce character display data in accordance with the stored digital codes.

8. A television receiver embodying a teletext decoder as claimed in Claim 7.

*Fig.1.*

*Fig.2.*

1-III-PHB 33481

EP 0 351 912 A1

2 - III- PHB 33481

# Fig.3.

|  |  |  |  |  | CC |  |  |  |  |  |  |  |  |  |  |  |  |  |  |  |
|---|---|---|---|---|---|---|---|---|---|---|---|---|---|---|---|---|---|---|---|---|
|  |  |  |  |  |  | 0 | 1 | 2 | 3 | 4 | 5 | 6 | 7 | 8 | 9 | 10 | 11 | 12 | 13 | 14 | 15 |
|  |  |  |  | $b8$ |  | 0 | 0 | 0 | 0 | 0 | 0 | 0 | 0 | 1 | 1 | 1 | 1 | 1 | 1 | 1 | 1 |
|  |  |  |  | $b7$ |  | 0 | 0 | 0 | 0 | 1 | 1 | 1 | 1 | 0 | 0 | 0 | 0 | 1 | 1 | 1 | 1 |
|  |  |  |  | $b6$ |  | 0 | 0 | 1 | 1 | 0 | 0 | 1 | 1 | 0 | 0 | 1 | 1 | 0 | 0 | 1 | 1 |
| $b4$ | $b3$ | $b2$ | $b1$ | $b5$ |  | 0 | 1 | 0 | 1 | 0 | 1 | 0 | 1 | 0 | 1 | 0 | 1 | 0 | 1 | 0 | 1 |
| **RR** |  |  |  |  |  |  |  |  |  |  |  |  |  |  |  |  |  |  |  |  |  |
| 0 | 0 | 0 | 0 | 0 |  | • | • | / | / | +11 | + | +12 | + | ⑪ | [11] |  |  | \ | \ | \ | \ |
| 1 | 0 | 0 | 0 | 1 |  | • | • | / | / | + | + | + | + | ⑫ | [12] |  |  | \ | \ | \ | \ |
| 2 | 0 | 0 | 1 | 0 |  | • | • | / | / | + | + | + | + | ⑧ | [8] |  |  | \ | \ | \ | \ |
| 3 | 0 | 0 | 1 | 1 |  | • | • | /10 | / | + | + | + | + | ⑩ | [10] |  |  | \ | \ | \ | \ |
| 4 | 0 | 1 | 0 | 0 |  | • | • | /13 | / | + | + | + | + | ⑬ | [13] |  |  | \ | \ | \ | \ |
| 5 | 0 | 1 | 0 | 1 |  | • | • | / | / | + | + | + | + |  |  |  |  | \ | \ | \ | \ |
| 6 | 0 | 1 | 1 | 0 |  | • | • | / | / | + | + | + | + |  |  |  |  | \ | \ | \ | \ |
| 7 | 0 | 1 | 1 | 1 |  | • | • | / | / | + | + | + | + |  |  |  |  | \ | \ | \ | \ |
| 8 | 1 | 0 | 0 | 0 |  | • | • | / | / | + | + | + | + | ⑤ | [5] |  |  | \ | \ | \ | \ |
| 9 | 1 | 0 | 0 | 1 |  | • | • | / | / | + | + | + | + | ⑥ | [6] |  |  | \ | \ | \ | \ |
| 10 | 1 | 0 | 1 | 0 |  | • | • | / | / | + | + | + | + | ⑦ | [7] |  |  | \ | \ | \ | \ |
| 11 | 1 | 0 | 1 | 1 |  | • | • | / | / | +9 | + | +8 | + | ⑨ | [9] |  |  | \ | \ | \ | \ |
| 12 | 1 | 1 | 0 | 0 |  | • | • | / | / | +1 | + | +5 | + | ① | [1] |  |  | \ | \ | \ | \ |
| 13 | 1 | 1 | 0 | 1 |  | • | • | / | / | +2 | + | +6 | + | ② | [2] |  |  | \ | \ | \ | \ |
| 14 | 1 | 1 | 1 | 0 |  | • | • | / | / | +3 | + | +7 | + | ③ | [3] |  |  | \ | \ | \ | \ |
| 15 | 1 | 1 | 1 | 1 |  | • | • | / | / | +4 | + | + | + | ④ | [4] |  |  | \ | \ | \ | \ |

CONT — PUNC — SERB — RUMA  SWED — CYRI

Fig.4.

EP 0 351 912 A1

3-Ⅲ-PHB 33481

## DOCUMENTS CONSIDERED TO BE RELEVANT

| Category | Citation of document with indication, where appropriate, of relevant passages | Relevant to claim | CLASSIFICATION OF THE APPLICATION (Int. Cl.X) 5 |
|---|---|---|---|
| A | <u>EP - A1 - 0 075 673</u><br>(IBM)<br>    * Abstract *<br>       -- | 1 | H 04 N 7/08<br>H 04 N 5/44 |
| D,A | <u>GB - A - 2 149 627</u><br>(PHILIPS)<br>    * Abstract *<br>       -- | 1 | |
| A | <u>DE - A1 - 2 909 873</u><br>(TELEDIFFUSION)<br>    * Fig. 6; page 17, line 13 -<br>    page 18, line 29; page 22,<br>    lines 11-15 *<br>       -- | 1 | |
| A | <u>GB - A - 1 586 431</u><br>(PHILIPS)<br>    * Fig. 8; page 15, line 54 -<br>    page 16, line 15 *<br>       ---- | 1 | |

**TECHNICAL FIELDS SEARCHED (Int. Cl.X) 5**

H 04 N 5/00
H 04 N 7/00
G 09 G 1/00

The present search report has been drawn up for all claims

| Place of search | Date of completion of the search | Examiner |
|---|---|---|
| VIENNA | 13-10-1989 | BENISCHKA |